# EUROPÄISCHE PATENTSCHRIFT

(11) **EP 2 542 746 B1**
(45) Veröffentlichungstag und Bekanntmachung des Hinweises auf die Patenterteilung: **24.04.2019**
(21) Anmeldenummer: 11700510.8
(22) Anmeldetag: 03.01.2011
(51) Int. Cl.: E05F 15/697, H02K 5/22, H02K 11/215

(54) **FENSTERHEBERANTRIEB**
WINDOW LIFTER DRIVE
COMMANDE DE LÈVE-VITRE

(30) Priorität: 02.03.2010 DE 102010002511
(43) Veröffentlichungstag der Anmeldung: 09.01.2013
(73) Patentinhaber: Robert Bosch GmbH, 70442 Stuttgart (DE)
(72) Erfinder: HUCK, Thomas, 77836 Rheinmuenster (DE)
(86) Internationale Anmeldenummer: PCT/EP2011/050005
(87) Internationale Veröffentlichungsnummer: WO 2011/107300

(56) Entgegenhaltungen:
- WO-A1-01/61828
- WO-A2-2009/098076
- DE-A1- 10 342 756
- DE-A1-102005 055 740
- DE-U1- 20 023 851

## Beschreibung

### Stand der Technik

Die vorliegende Erfindung betrifft einen Fensterheberantrieb zur Anwendung in einem Kraftfahrzeug.

Der Stand der Technik kennt Fensterheberantriebe mit Elektronikleiterplatten, wobei in diesen Antrieben verschiedene Funktionalitäten realisiert werden, wie beispielsweise eine Einklemmschutzfunktion. Zur Anbindung der Fensterheberantriebe an kundenseitige, d.h., fahrzeugseitige, Schnittstellen weisen die Gehäuse dieser Antriebe Steckerkrägen auf. In diesen Steckerkrägen sind antriebsseitige Steckerpins bzw. Federkontakte ausgebildet. Diese Steckerpins sind auf die Leiterplatte des Fensterheberantriebs eingelötet oder eingepresst. Die fensterheberantriebsseitige Schnittstelle wird somit durch hervorstehende Pins gebildet. Die Leiterplatten sind dabei parallel oder senkrecht zu einer Anschraubebene des Fensterheberantriebs eingebaut. Die Fensterheberantriebe nach dem Stand der Technik umfassen ein Gehäuse mit einem Deckelbauteil. Bei geöffnetem Deckel kann die Leiterplatte in das Gehäuse eingesetzt werden und das Gehäuse mittels des Deckels anschließend verschlossen werden.

WO 01/61828 A1 zeigt einen Fensterheberantrieb gemäß dem Oberbegriff des Anspruchs 1.

WO 2009/098076 A2 zeigt eine Antriebseinheit für einen elektrischen Fensterheber. Die Antriebseinheit umfasst einen Antriebsmotor mit einer Antriebswelle, auf der ein Ringmagnet aufgebracht ist. Des Weiteren ist eine Leiterplatte gezeigt, die einen mit dem Ringmagnet korrespondierenden HallSensor aufweist, wobei die Leiterplatte schräg zur Achse der Antriebswelle im Getriebegehäuse angeordnet ist.

DE 10 2005 055 740 A1 zeigt eine elektrische Maschine mit Kontaktpads auf einer Leiterplatte.

DE 200 23 851 U1 zeigt eine elektromechanische Antriebsvorrichtung für Verstelleinrichtungen in Kraftfahrzeugen mit als Kontaktstifte ausgebildeten Kontaktelementen, die mit der Steuerungsvorrichtung fest verbunden sind und mit einem ein antriebsvorrichtungsseitiges Anschlusselement einer Leitungsverbindung komplementierenden Steckerkragen.

### Offenbarung der Erfindung

Der erfindungsgemäße Fensterheberantrieb mit den Merkmalen des Anspruchs 1 ermöglicht es nun, insbesondere durch eine besonders vorteilhafte Gestaltung der Leiterplattengröße auf zusätzliche Gehäuse- oder Deckelbauteile zu verzichten. Darüber hinaus ermöglicht die mittige Lage der Leiterplatte innerhalb des Steckerkragens und die Positionierung des Steckerkragens im allgemein zugänglichen Bauraum die Anwendung einer Direktsteckverbindung. Der Verzicht auf antriebsseitige Steckerpins führt bei diesem Kontaktierkonzept zu signifikanten Kosteneinsparungen bei Werkzeugen und Einzelteilen. Darüber hinaus hat die wesentlich einfachere Gehäusekonstruktion, insbesondere ohne die Steckerpins, Vorteile bei der flexiblen Gestaltung der

Antriebsgehäusewerkzeuge hinsichtlich der Realisierung verschiedener Steckerausführungen. Ein weiterer Zweck ist die Verkürzung der Werkzeuganfertigungszeiten für die Antriebsgehäuse. Dies führt wiederum zu einer Verkürzung des Entwicklungszeitraums. Die Verwendung kleiner Leiterplattengrößen ermöglicht es, diese Leiterplatten durch den Steckerkragen in das Gehäuse einzuschieben, wodurch zusätzliche Gehäuse- und Deckelbauteile entfallen. All diese Vorteile werden erreicht durch den erfindungsgemäßen Verstellantrieb, umfassend einen Elektromotor, insbesondere DC-Motor, eine Abtriebswelle, eine Leiterplatte, ein Gehäuse und eine Anschlussschnittstelle, wobei der Elektromotor mit der Leiterplatte kontaktiert ist und zum Antrieb der Abtriebswelle ausgebildet ist, wobei das Gehäuse die Leiterplatte aufnimmt, wobei die Anschlussschnittstelle eine Direktsteckverbindung mit Kontaktierpads direkt auf der Leiterplatte umfasst, und wobei die Kontaktierpads zum direkten Kontakt mit einem Stecker ausgebildet sind. Ferner umfasst die Anschlussschnittstelle eine Gehäuseöffnung im Gehäuse als Zugang für den Stecker zu den Kontaktierpads, wobei die Leiterplatte schmäler dimensioniert ist als die Gehäuseöffnung, so dass die Leiterplatte durch die Gehäuseöffnung ins Gehäuse einschiebbar ist. Die Kontaktierpads der Leiterplatte sind derart ausgebildet, dass sie zum direkten Kontakt mit Federkontakten eines Steckers ausgebildet sind. Insbesondere kann die neuartige, kleine Leiterplatte mit besonders kleinen Sensorleiterplatten bestückt werden.

Die Unteransprüche zeigen bevorzugte Weiterbildungen der Erfindung.

In vorteilhafter Ausgestaltung ist vorgesehen, dass die Leiterplatte eine erste Verrastvorrichtung und das Gehäuse eine zur ersten Verrastvorrichtung komplementäre zweite Verrastvorrichtung umfasst, und/oder dass die Leiterplatte einen Anschlag zur definierten Positionierung der Leiterplatte im Gehäuse umfasst. Besonders vorteilhaft ist vorgesehen, dass die Leiterplatte eine aufgesetzte Halterung, insbesondere aus Kunststoff, umfasst, wobei die erste Verrastvorrichtung und/oder der Anschlag an der Halterung ausgebildet sind. Der Elektromotor umfasst bevorzugt zwei Pins, wobei vorteilhafterweise die Leiterplatte eine auf beide Pins aufsteckbare Motorkontaktiervorrichtung, insbesondere Gabelkontaktierung, umfasst. Diese Motorkontaktiervorrichtung ist vorteilhafterweise zusammen mit der ersten Verrastvorrichtung und/oder dem Anschlag an der Halterung ausgebildet. Die Gabelkontaktierung ist bevorzugt mit der Leiterplatte verlötet oder per Einpresstechnik kontaktiert. Durch eine besonders vorteilhafte Konturgebung kann der Halter zusammen mit den Gabelkontakten in einem Reflow-Prozess der Leiterplattenfertigung kostengünstig zusammen mit den Elektronikbauteilen gelötet werden. Die Motorkontaktiervorrichtung wird benötigt, um die elektrische Kontaktierung von der Anschlussschnittstelle zu den Kohlebürsten des DC-Motors zu herzustellen.

Des Weiteren ist es bevorzugt, dass sich die Gehäuseöffnung senkrecht zu einer Ankerachse des Elektromotors öffnet und die Leiterplatte senkrecht zur Ankerachse einschiebbar ist. Dieses senkrechte Einschieben zur Ankerachse bezieht sich auf die Einschiebrichtung. Wie sich später zeigen wird, kann dabei die Leiterplatte selbst parallel, schräg oder senkrecht zu einer Ebene, welche senkrecht zur Abtriebswelle des Verstellantriebs steht, angeordnet sein.

Ferner ist es von Vorteil, dass die Anschlussschnittstelle einen Steckerkragen an einer Außenseite des Gehäuses und um die Gehäuseöffnung herum umfasst, wobei sich der Steckerkragen in Richtung der Abtriebswelle nicht weiter erstreckt als das Gehäuse selbst, und wobei die Kontaktierpads mittig zum Steckerkragen angeordnet sind. Durch diese relativ schmale Ausgestaltung des Steckerkragens wird sichergestellt, dass der Verstellantrieb, insbesondere Fensterheberantrieb, in den zur Verfügung stehenden Bauraum passt. Um eine Kontaktierung der Leiterplatte zu einem Stecker, beispielsweise bordnetzseitig im Fahrzeug, zu realisieren, wird die Leiterplatte bevorzugt ungefähr mittig zum Steckerkragen positioniert. Da aufseiten des erfindungsgemäßen Verstellantriebs auf Steckerpins verzichtet wird, müssen die steckerseitigen Federkontakte auf den Kontaktierpads der Leiterplatte aufliegen. Diese Kontaktierungsart wird als Direktsteckverbindung bezeichnet.

Des Weiteren ist es von Vorteil, dass der Elektromotor einen Bürstenträger und ein Polgehäuse umfasst, wobei der Bürstenträger in das Polgehäuse eingesteckt ist und sich das Polgehäuse außerhalb des Gehäuses an den Bürstenträger anschließt. Das Gehäuse des Verstellantriebes nimmt somit einen Teil des Elektromotors auf.

In bevorzugter Ausgestaltung ist vorgesehen, dass auf der Ankerachse des Elektromotors ein Gebermagnet sitzt, wobei der Gebermagnet mit einem Hallsensor auf der Leiterplatte zusammenwirkt. Die Leiterplatte ist folglich derart ausgebildet, dass sie sich mit dem Hallsensor über oder unter die Ankerachse erstreckt. Dadurch kann Drehwinkel oder Drehzahl des Elektromotors dektiert werden.

In besonders vorteilhafter Ausgestaltung ist die Leiterplatte mit einem Winkel α schräg zu einer Ebene, welche senkrecht zur Abtriebswelle liegt, angeordnet. Der Winkel ist dabei so gewählt, dass die Kontaktierpads mittig in der Gehäuseöffnung sitzen. Somit wird es ermöglicht, dass einerseits der Hallsensor auf der Leiterplatte über bzw. unter der Ankerachse des Elektromotors sitzt und andererseits die Kontaktierpads innerhalb des zur Verfügung stehenden Bauraums mittig im Steckerkragen angeordnet sind.

In besonders vorteilhafter Ausgestaltung steht die Ankerachse des Elektromotors senkrecht zur Abtriebswelle des erfindungsgemäßen Verstellantriebs, wobei der Winkel α der Leiterplatte 1 bis 15 Grad, vorzugsweise 10 Grad, beträgt, so dass eine Ausdehnung von Gehäuse und Elektromotor in Richtung der Abtriebswelle möglichst gering ist. Dies ist besonders wichtig bei der Verwendung des erfindungsgemäßen Verstellantriebs als Fensterheberantrieb, da hier lediglich der geringe Bauraum innerhalb einer Fahrzeugtür zur Verfügung steht.

In einer alternativen Ausgestaltung ist vorgesehen, dass die Leiterplatte senkrecht zur Ebene, welche senkrecht zur Abtriebswelle liegt, angeordnet ist. Dies bedeutet, dass die Leiterplatte zwar weiterhin in einer Richtung senkrecht zur Ankerachse des Elektromotors eingeschoben wird, die Leiterplatte dabei jedoch senkrecht zu dieser Ebene steht. Dabei müssen insbesondere sehr kleinbauende Hallsensoren zum Einsatz kommen, um den zur Verfügung stehenden Bauraum nicht zu erweitern.

Die Erfindung umfasst des Weiteren einen Fensterheberantrieb für die Anwendung in einem Kraftfahrzeug, umfassend einen Verstellantrieb, wie er soeben beschrieben wurde, und einen Stecker mit vorstehenden Federkontakten, wobei die Federkontakte in den Verstellantrieb hineinragen und in direktem Kontakt mit den Kontaktierpads stehen. Die im Rahmen des erfindungsgemäßen Verstellantriebs beschriebenen vorteilhaften Ausgestaltungen finden selbstverständlich entsprechend vorteilhafte Anwendung auf den erfindungsgemäßen Fensterheberantrieb.

Die Erfindung umfasst des Weiteren ein Verfahren zur Montage eines Verstellantriebs, umfassend die folgenden Schritte: Bereitstellen eines Gehäuses mit einer Gehäuseöffnung, Einschieben einer Leiterplatte in die Gehäuseöffnung, wobei die Leiterplatte schmäler dimensioniert ist als die Gehäuseöffnung, und Montieren eines Elektronmotors vor oder nach dem Einschieben der Leiterplatte an und/oder im Gehäuse, wobei der Elektromotor mit der Leiterplatte kontaktiert wird, wobei am Verstellantrieb eine Anschlussschnittstelle ausgebildet ist, welche eine Direktsteckverbindung mit Kontaktierpads direkt auf der Leiterplatte umfasst, wobei die Kontaktierpads zum direkten Kontakt mit Federkontakten eines Steckers ausgebildet sind, und wobei die Gehäuseöffnung als Bestandteil der Anschlussschnittstelle als Zugang für den Stecker zu den Kontaktierpads fungiert. Es wird somit ein- und dieselbe Öffnung sowohl für das Einschieben der Leiterplatte in das Gehäuse als auch zum Einstecken des Steckers verwendet. Dadurch erübrigt sich ein zusätzlicher Deckel auf dem Gehäuse zur Montage der Leiterplatte. Die im Rahmen des erfindungsgemäßen Verstellantriebs beschriebenen vorteilhaften Ausgestaltungen finden entsprechend vorteilhafte Anwendungen auf das erfindungsgemäße Verfahren zur Montage des Verstellantriebs.

### Kurze Beschreibung der Zeichnung

Nachfolgend werden zwei Ausführungsbeispiele der Erfindung unter Bezugnahme auf die begleitende Zeichnung im Detail beschrieben. In der Zeichnung zeigt:
- Figur 1: einen Verstellantrieb gemäß einem ersten Ausführungsbeispiel,
- Figur 2: eine Detailansicht des Elektromotors mit Leiterplatte des Verstellantriebs gemäß dem ersten Ausführungsbeispiel,
- Figur 3: eine Anschlussschnittstelle des Verstellantriebs gemäß dem ersten Ausführungsbeispiel,
- Figur 4: eine erste Detailansicht der Leiterplatte des Verstellantriebs gemäß dem ersten Ausführungsbeispiel,
- Figur 5: eine zweite Detailansicht der Leiterplatte des Verstellantriebs gemäß dem ersten Ausführungsbeispiel,
- Figur 6: eine dritte Detailansicht der Leiterplatte des Verstellantriebs gemäß dem ersten Ausführungsbeispiel, und
- Figur 7: einen Verstellantrieb gemäß einem zweiten Ausführungsbeispiel.

### Ausführungsformen der Erfindung

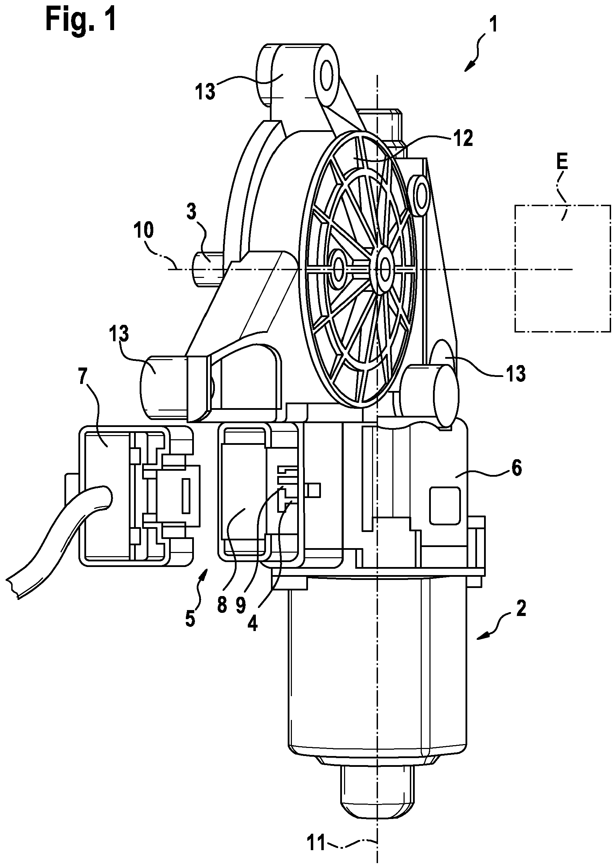

Im Folgenden wird anhand der Figuren 1 bis 6 ein erstes Ausführungsbeispiel der Erfindung genauer erläutert.

Figur 1 zeigt einen Verstellantrieb 1 gemäß dem ersten Ausführungsbeispiel, umfassend einen Elektromotor 2, eine Abtriebswelle 3, eine Leiterplatte 4, ein Gehäuse 6 und eine Anschlussschnittstelle 5.

Der Elektromotor umfasst eine Ankerachse 11. Nicht dargestellt ist, wie der Elektromotor 2 eine Schnecke antreibt. Diese Schnecke wiederum greift in ein entsprechendes Schneckenrad ein. Das Schneckenrad treibt die Abtriebswelle 3 an. Dadurch steht eine Abtriebsachse 10 der Abtriebswelle 3 senkrecht zur Ankerachse 11 des Elektromotors 2. Senkrecht zu der Abtriebswelle 3 bzw. entsprechender Abtriebsachse 10 steht eine Ebene E. Alternativ kann ein Abtrieb auch über einen Mitnehmer erfolgen.

Das Gehäuse 6 umfasst einen Getriebegehäuseanteil 12. Dieser Getriebegehäuseanteil 12 nimmt ein Getriebe, bestehend aus der Schneckenwelle und dem Schneckenrad, auf. Am Getriebegehäuseanteil 12 sind drei Anschraubstellen 13 vorgesehen. Mittels dieser drei Anschraubstellen 13 kann der ganze Verstellantrieb 1 beispielsweise in einer Fahrzeugtür montiert werden.

Ein Teil des Gehäuses 6 bildet zusammen mit einem Teil der Leiterplatte 4 die Anschlussschnittstelle 5. Diese Anschlussschnittstelle 5 umfasst eine Gehäuseöffnung 8. Mittig in dieser Gehäuseöffnung 8 sind Kontaktierpads 9 auf der Leiterplatte 4 angeordnet. Durch diese mittige Anordnung sind die Kontaktierpads 9 frei zugänglich für Federkontakte innerhalb eines Steckers 7.

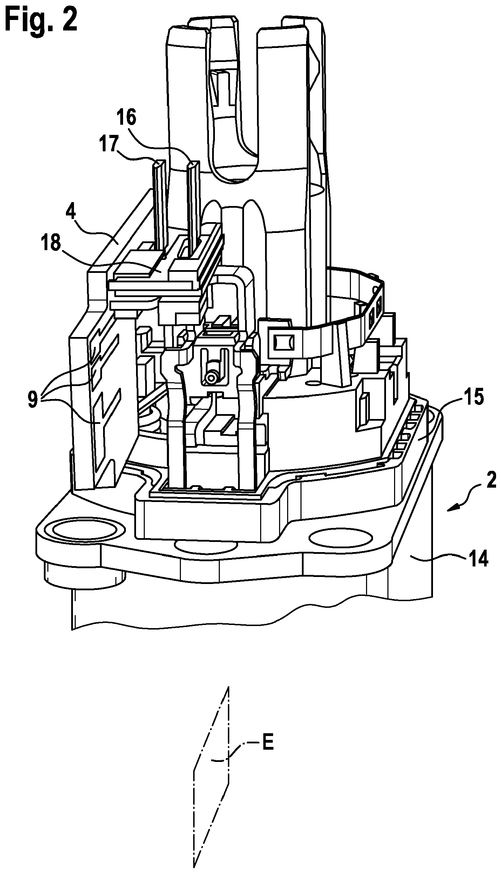

Figur 2 zeigt im Detail den Aufbau des Elektromotors 2 sowie dessen Kontaktierung durch die Leiterplatte 4 ohne das Getriebegehäuse. Der Elektromotor 2 umfasst einen Poltopf 14 und einen Bürstenträger 15. Der Poltopf 14 ist außen an das Gehäuse 6 angeflanscht. Der Bürstenträger 15 ragt in das Gehäuse 6 hinein. Der Elektromotor 2 umfasst am Bürstenträger 15 einen ersten Pin 16 sowie einen zweiten Pin 17. Der erste und zweite Pin 16, 17 erstrecken sich in Richtung der Ankerachse 11.

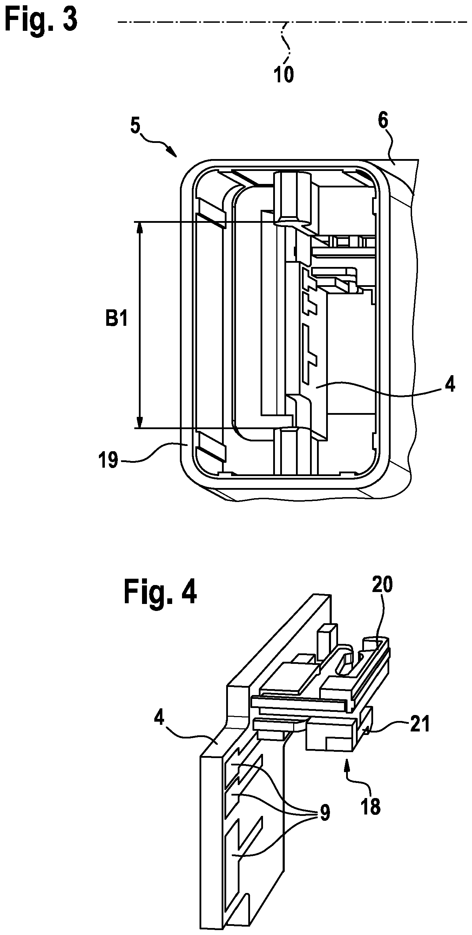

Die Leiterplatte 4 umfasst eine Halterung 18, welche auf den ersten und zweiten Pin 16, 17 aufgeschoben wird. Dadurch wird der Elektromotor 2 kontaktiert. Den genauen Aufbau der Halterung 18 auf der Leiterplatte 4 zeigen die Figuren 4 bis 6.

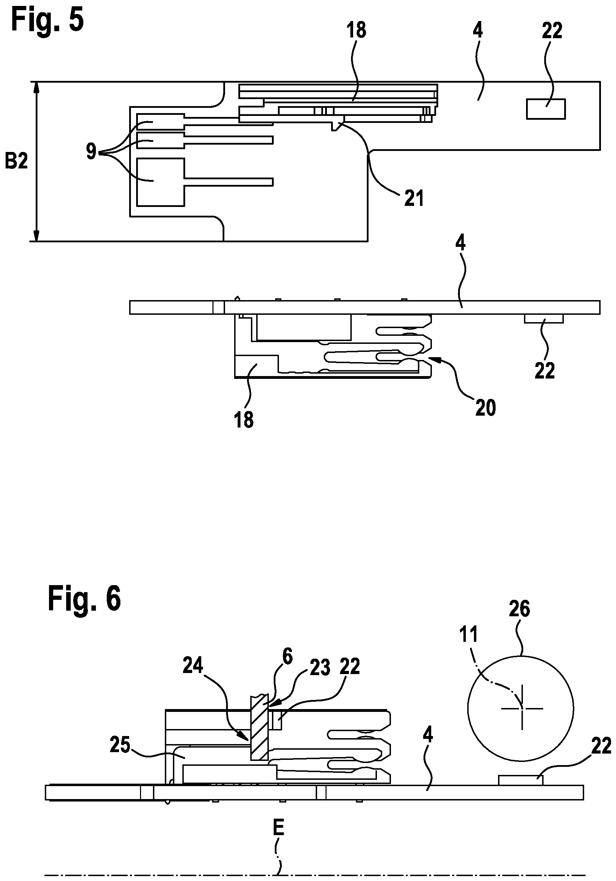

Figur 3 zeigt die Anschlussschnittstelle 5 im Detail. Hierbei ist gut zu sehen, wie die Anschlussschnittstelle 5 einen Steckerkragen 19 umfasst. Dieser Steckerkragen 19 ist integraler Bestandteil des Gehäuses 6 und ragt nach außen vor. In einer Richtung parallel zur Abtriebsachse 10 erstreckt sich der Steckerkragen 19 nicht weiter als das gesamte Gehäuse 6. Dadurch wird eine möglichst schmale Ausgestaltung des gesamten Verstellantriebs 1 sichergestellt. Des Weiteren zeigt Figur 3 eine Breite B1 der Gehäuseöffnung 8. Wie sich anhand von Figur 5 zeigen wird, erstreckt sich die Leiterplatte 4 lediglich um eine Breite B2. Die erste Breite B1 ist dabei größer der zweiten Breite B2. Dadurch wird sichergestellt, dass die Leiterplatte 4 durch die Gehäuseöffnung 8 hindurch montierbar ist. Somit entfallen zusätzliche Deckelbauteile am Gehäuse 6.

Die Figuren 4 bis 6 zeigen die Leiterplatte 4 im Detail. Zu sehen ist, wie die Halterung 18 als Kunststoffteil auf die Leiterplatte 4 aufgesetzt ist. Innerhalb bzw. auf der Halterung 18 ist eine Motorkontaktiervorrichtung, ausgebildet als Gabelkontaktierung 20, ausgebildet. Diese Gabelkontaktierung 20 umfasst zwei schlitzförmige Öffnungen. Diese beiden schlitzförmigen Öffnungen werden auf den ersten und zweiten Pin 16, 17 des Elektromotors 2 aufgeschoben. Dadurch ist es möglich, ohne die Leiterplatte 4 mit dem Elektromotor 2 zu verlöten, die Leiterplatte 4 bei bereits montiertem Elektromotor 2 in das Gehäuse 6 einzuschieben. Zur Übertragung der Elektrizität von der Leiterplatte 4 über die Halterung 18 hin zu den ersten und zweiten Pins 16, 17 des Elektromotors 2 befinden sich Leiterstreifen 25 innerhalb der Gabelkontaktierung 20.

Ferner ist an der Halterung 18 eine erste Verrastvorrichtung 21 ausgebildet. Diese erste Verrastvorrichtung 21 ist als Rastnase, wie sie Figur 5 zeigt, ausgeführt. Figur 6 zeigt wiederum, wie diese erste Verrastvorrichtung 21 mit einer zweiten Verrastvorrichtung 23 am Gehäuse 6 zusammenwirkt. Darüber hinaus umfasst die Halterung 18 einen Anschlag 24. Bei montierter Leiterplatte 4 befindet sich die zweite Verrastvorrichtung 23 als Teil des Gehäuses 6 zwischen der ersten Verrastvorrichtung 21 und dem Anschlag. Dadurch ist eine definierte Lage der gesamten Leiterplatte 4 sichergestellt. Auf der Leiterplatte 4 ist des Weiteren ein Hallsensor 22 ausgebildet. Entsprechend befindet sich auf der Ankerachse 11 ein Gebermagnet 26. Mittels der ersten und zweiten Verrastvorrichtung 21, 23 und des Anschlags 24 wird der Hallsensor 22 in exakter Position zum Gebermagnet 26 gebracht. Um den gesamten Bauraum möglichst gering zu halten, sitzt die Leiterplatte 4 etwas schräg, so dass die Kontaktierpads 9 mittig innerhalb des Steckerkragens 19 sitzen.

Anhand dieses Ausführungsbeispiels wurde gezeigt, wie durch die vorteilhafte Dimensionierung der Leiterplatte 4 selbige durch die Gehäuseöffnung 8 montierbar ist. Diese Gehäuseöffnung 8 dient gleichzeitig als Anschlussschnittstelle für den Stecker 7. Dadurch entfallen die Deckelbauteile, welche bei herkömmlichen Verstellantrieben die Leiterplattenmontage ermöglichen. Darüber hinaus kann durch die erfindungsgemäß ausgestaltete Motorkontaktiervorrichtung 20 die Leiterplatte 4 auf sehr einfache und schnelle Weise mit dem Elektromotor 2 in Kontakt gebracht werden. Es ist daher nicht notwendig, über Deckelbauteile einen Zugang zum Verlöten von Leiterplatte 4 und Elektromotor 2 bereitzustellen.

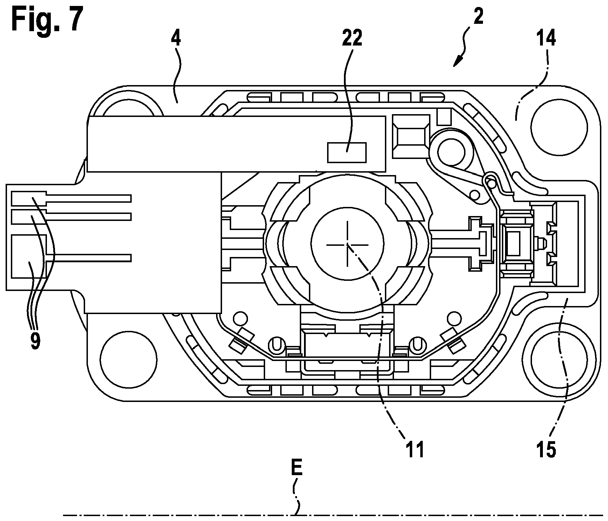

Figur 7 zeigt ein zweites Ausführungsbeispiel des Verstellantriebs 1. Gleiche bzw. funktional gleiche Bauteile sind in beiden Ausführungsbeispielen mit denselben Bezugszeichen bezeichnet. In beiden Ausführungsbeispielen wird die Leiterplatte 4 bei der Montage senkrecht zur Ankerachse 11 des Elektromotors 2 eingeschoben. Im ersten Ausführungsbeispiel ist die Leiterplatte 4 dabei parallel oder leicht schräg, mit einem Winkel zwischen 1 bis 15 Grad, zur Ebene E angeordnet. Im zweiten Ausführungsbeispiel hingegen ist die Leiterplatte 4 senkrecht zu der Ebene E angeordnet. Durch eine L-förmige Ausgestaltung der Leiterplatte 4 kann dabei sichergestellt werden, dass der Anteil der Leiterplatte 4, auf welchem sich der Hallsensor 22 befindet, ober- oder unterhalb der Ankerachse 11 positioniert werden kann. Hierbei kommen insbesondere sehr kleinbauende Hallsensoren 22 zur Anwendung.

## Patentansprüche

1. **Fensterheberantrieb zur Anwendung in einem Kraftfahrzeug umfassend einen Verstellantrieb (1) und einen Stecker (7) mit vorstehenden Federkontakten, wobei die Federkontakte in den Verstellantrieb (1) hineinragen und in direktem Kontakt mit Kontaktierpads (9) stehen, wobei der**
Verstellantrieb (1) einen Elektromotor (2), eine Abtriebswelle (3), eine Leiterplatte (4), ein Gehäuse (6) und eine Anschlussschnittstelle (5) **umfasst,**
- wobei der Elektromotor (2) mit der Leiterplatte (4) kontaktiert ist und zum Antrieb der Abtriebswelle (3) ausgebildet ist,
- wobei das Gehäuse (6) die Leiterplatte (4) aufnimmt, und
- wobei die Leiterplatte (4) schmäler dimensioniert ist als eine Gehäuseöffnung (8), so dass die Leiterplatte (4) durch die Gehäuseöffnung (8) ins Gehäuse (6) einschiebbar ist,
**dadurch gekennzeichnet, dass**
- die Anschlussschnittstelle (5) eine Direktsteckverbindung mit den Kontaktierpads (9) umfasst, wobei die Kontaktierpads (9) zum direkten Kontakt mit einem Stecker (7) ausgebildet sind, und aufseiten des Verstellantriebs (1) auf Steckerpins verzichtet wird, sodass die steckerseitigen vorstehenden Federkontakte direkt auf den Kontaktierpads (9) der Leiterplatte (4) aufliegen,
- und wobei die gleiche Gehäuseöffnung (8) durch die die Leiterplatte (4) ins Gehäuse (6) einschiebbar ist, **gleichzeitig** als Bestandteil der Anschlussschnittstelle (5) als Zugang für den Stecker (7) zu den Kontaktierpads (9) fungiert.

2. **Fensterheberantrieb** nach Anspruch 1, **dadurch gekennzeichnet, dass** die Leiterplatte (4) eine erste Verrastvorrichtung (21) und das Gehäuse (6) eine zur ersten Verrastvorrichtung (21) komplementäre zweite Verrastvorrichtung (23) umfasst, und/oder das die Leiterplatte (4) einen Anschlag (24) zur definierten Positionierung der Leiterplatte (4) im Gehäuse (6) umfasst.

3. **Fensterheberantrieb** nach Anspruch 2, **dadurch gekennzeichnet, dass** die Leiterplatte (4) eine aufgesetzte Halterung (18), insbesondere aus Kunststoff, umfasst, wobei die erste Verrastvorrichtung (21) und/oder der Anschlag (24) an der Halterung (18) ausgebildet sind.

4. **Fensterheberantrieb** nach einem der vorhergehenden Ansprüche, **dadurch gekennzeichnet, dass** der Elektromotor (2) zwei Pins (16,17) umfasst, und dass die Leiterplatte eine auf die beiden Pins (16,17) aufsteckbare Motorkontaktiervorrichtung (20), insbesondere Gabelkontaktierung, umfasst.

5. **Fensterheberantrieb** nach einem der vorhergehenden Ansprüche, **dadurch gekennzeichnet, dass** sich die Gehäuseöffnung (8) senkrecht zu einer Ankerachse (11) des Elektromotors (2) öffnet und die Leiterplatte (4) senkrecht zur Ankerachse (11) einschiebbar ist.

6. **Fensterheberantrieb** nach einem der vorhergehenden Ansprüche, **dadurch gekennzeichnet, dass** die Anschlussschnittstelle (5) einen Steckerkragen (19) an einer Außenseite des Gehäuses (6) und um die Gehäuseöffnung (8) herum umfasst, wobei sich der Steckerkragen (19) in Richtung der Abtriebswelle (3) nicht weiter erstreckt als das Gehäuse (6), und wobei die Kontaktierpads (9) mittig zum Streckerkragen (19) angeordnet sind.

7. **Fensterheberantrieb** nach einem der vorhergehenden Ansprüche, **dadurch gekennzeichnet, dass** der Elektromotor (2) einen Bürstenträger (15) und ein Polgehäuse (14) umfasst, wobei der Bürstenträger (15) in das Gehäuse (6) eingesteckt ist und sich das Polgehäuse (14) außerhalb des Gehäuses (6) an den Bürstenträger (15) anschließt.

8. **Fensterheberantrieb** nach einem der vorhergehenden Ansprüche, **dadurch gekennzeichnet, dass** auf der Ankerachse (11) des Elektromotors (2) ein Gebermagnet (26) sitzt, wobei der Gebermagnet (26) mit einem Hallsensor (22) auf der Leiterplatte (4) zusammenwirkt.

9. **Fensterheberantrieb** nach einem der vorhergehenden Ansprüche, **dadurch gekennzeichnet, dass** die Leiterplatte (4) mit einem Winkel (α) schräg zu einer Ebene (E), welche senkrecht zur Abtriebswelle (3) liegt, angeordnet ist, wobei der Winkel (α) so gewählt ist, dass die Kontaktierpads (9) mittig in der Gehäuseöffnung (8) sitzen.

10. **Fensterheberantrieb** nach Anspruch 9, **dadurch gekennzeichnet, dass** die Ankerachse (11) des Elektromotors (2) senkrecht zur Abtriebswelle (3) steht und der Winkel (a) 1 Grad bis 15 Grad, vorzugsweise 10 Grad, beträgt, so dass eine Ausdehnung von Gehäuse (6) und Elektromotor (2) in Richtung der Abtriebswelle (3) möglichst gering ist.

11. **Fensterheberantrieb** nach einem der Ansprüche 1 bis 8, **dadurch gekennzeichnet, dass** die Leiterplatte (4) senkrecht zur Ebene (E), welche senkrecht zur Abtriebswelle (3) liegt, angeordnet ist.

12. **Fensterheberantrieb nach einem der Ansprüche 1 bis 9, dadurch gekennzeichnet, dass die Anschlussschnittstelle (5) einen Steckerkragen (19) umfasst, der integraler Bestandteil des Gehäuses (6) ist und nach außen vorragt, wobei sich der Steckerkragen (19) in einer Richtung parallel zu einer Abtriebsachse (10) der Abtriebswelle (3) des Verstellantriebs (1) nicht weiter als das gesamte Gehäuse (6) erstreckt.**

13. Verfahren zur Montage des Verstellantriebs (1) eines Fensterheberantriebs nach einem der Ansprüche 1-12 **und zum Einstecken eines Steckers (7) in diesen,** umfassend die folgenden Schritte:
- Bereitstellen eines Gehäuses (6) mit einer Gehäuseöffnung (8),
- Einschieben einer Leiterplatte (4) in die Gehäuseöffnung (8), wobei die Leiterplatte (4) schmäler dimensioniert ist als die Gehäuseöffnung (8), und
- Montieren eines Elektronmotors (2) vor oder nach dem Einschieben der Leiterplatte (4) an und/oder im Gehäuse (6),
- wobei der Elektromotor (2) mit der Leiterplatte (4) kontaktiert wird,
- wobei am Verstellantrieb (1) eine Anschlussschnittstelle (5) ausgebildet ist, welche eine Direktsteckverbindung mit Kontaktierpads (9) direkt auf der Leiterplatte (4) umfasst,
- **Einstecken eines Steckers (7) in die Gehäuseöffnung (8),**
- wobei die Kontaktierpads (9) zum direkten Kontakt mit Federkontakten eines Steckers (7) ausgebildet sind, und aufseiten des Verstellantriebs (1) auf Steckerpins verzichtet wird, sodass die steckerseitigen vorstehenden Federkontakte direkt auf den Kontaktierpads (9) der Leiterplatte (4) aufliegen,
- **wobei die ein- und dieselbe Gehäuseöffnung (8) sowohl für das Einschieben der Leiterplatte (4) ins Gehäuse (6) als auch zum Einstecken des Steckers (7) verwendet wird.**

## Claims

1. Window lifter drive for application in a motor vehicle comprising an adjusting drive (1) and a connector (7) with protruding spring contacts, wherein the spring contacts protrude into the adjusting drive (1) and are in direct contact with contacting pads (9), wherein the adjusting drive (1) comprises an electric motor (2), an output shaft (3), a circuit board (4), a housing (6) and a connection interface (5),
- wherein the electric motor (2) is contact-connected to the circuit board (4) and designed for driving the output shaft (3),
- wherein the housing (6) accommodates the circuit board (4), and
- wherein the circuit board (4) is dimensioned to be narrower than the housing opening (8) so that the circuit board (4) can be inserted into the housing (6) through the housing opening (8), **characterized in that**
- the connection interface (5) comprises a direct plug-in connection to the contacting pads (9), wherein the contacting pads (9) are designed for direct contact with a connector (7), and the adjusting drive (1) dispenses with connector pins so that the protruding spring contacts at the connector rest directly on the contacting pads (9) of the circuit board (4),
- and wherein the same housing opening (8), as component of the connection interface (5), acts through which the circuit board (4) can be inserted into the housing (6) at the same time as access for the connector (7) to the contacting pads (9).

2. Window lifter drive according to Claim 1, **characterized in that** the circuit board (4) comprises a first locking device (21) and the housing (6) comprises a second locking device (23) complementary to the first locking device (21), and/or that the circuit board (4) comprises a stop (24) for the defined positioning of the circuit board (4) in the housing (6).

3. Window lifter drive according to Claim 2, **characterized in that** the circuit board (4) comprises a mounted holder (18), especially of plastic, wherein the first locking device (21) and/or the stop (24) are formed on the holder (18).

4. Window lifter drive according to one of the preceding claims, **characterized in that** the electric motor (2) comprises two pins (16, 17) and **in that** the circuit board comprises a motor contact-connection device (20), especially forked contact-connection device, which can be plugged onto both pins (16, 17).

5. Window lifter drive according to one of the preceding claims, **characterized in that** the housing opening (8) opens perpendicularly to an armature axis (11) of the electric motor (2) and the circuit board (4) can be pushed in perpendicularly to the armature axis (11).

6. Window lifter drive according to one of the preceding claims, **characterized in that** the connection interface (5) comprises a connector shroud (19) on an outside of the housing (6) and around the housing opening (8), wherein the connector shroud (19) extends no further than the housing (6) in the direction of the output shaft (3) and wherein the contacting pads (9) are arranged centrally with respect to the connector shroud (19).

7. Window lifter drive according to one of the preceding claims, **characterized in that** the electric motor (2) comprises a brush carrier (15) and a pole housing (14), wherein the brush carrier (15) is inserted into the housing (6) and the pole housing (14) adjoins the brush carrier (15) outside the housing (6).

8. Window lifter drive according to one of the preceding claims, **characterized in that** a transmitter magnet (26) is located on the armature axis (11) of the electric motor (2), the transmitter magnet (26) interacting with a Hall sensor (22) on the circuit board (4) .

9. Window lifter drive according to one of the preceding claims, **characterized in that** the circuit board (4) is arranged at an angle (α) obliquely to a plane (E) which is perpendicular to the output shaft (3), the angle (α) being selected in such a manner that the contacting pads (9) are located centrally in the housing opening (8).

10. Window lifter drive according to Claim 10, **characterized in that** the armature axis (11) of the electric motor (2) is perpendicular to the output shaft (3) and the angle (α) is 1 degree to 15 degrees, preferably 10 degrees, so that an extent of housing (6) and electric motor (2) in the direction of the output shaft (3) is as small as possible.

11. Window lifter drive according to one of Claims 1 to 8, **characterized in that** the circuit board (4) is arranged perpendicularly to the plane (E) which is perpendicular to the output shaft (3).

12. Window lifter drive according to one of Claims 1 to 9, **characterized in that** the connection interface (5) comprises a connector shroud (19) which is an integral component of the housing (6) and protrudes outward, wherein the connector shroud (19) does not extend further than the entire housing (6) in a direction parallel to an output axis (10) of the output shaft (3) of the adjusting drive (1).

13. Method for assembling the adjusting drive (1) of a window lifter drive according to one of Claims 1-12 and for plugging a connector (7) into it, comprising the following steps:
- providing a housing (6) having a housing opening (8),
- inserting a circuit board (4) into the housing opening (8), wherein the circuit board (4) is dimensioned to be narrower than the housing opening (8), and
- mounting an electric motor (2) before or after inserting the circuit board (4) at and/or in the housing (6),
- wherein the electric motor (2) is contact-connected to the circuit board (4),
- wherein at the adjusting drive (1), a connection interface (5) is formed which comprises a direct plug-in connection to contacting pads (9) directly on the circuit board (4),
- plugging a connector (7) into the housing opening (8),
- wherein the contacting pads (9) are designed for direct contact with spring contacts of a connector (7), and the adjusting drive (1) dispenses with connector pins so that the protruding spring contacts at the connector rest directly on the contacting pads (9) of the circuit board (4),
- wherein the same housing opening (8) is used both for inserting the circuit board (4) into the housing (6) and for plugging-in the connector (7).

## Revendications

1. Entraînement de lève-vitres destiné à l'application dans un véhicule motorisé comprenant un entraînement réglable (1) et une fiche (7) dotée de contacts élastiques saillants, dans lequel les contacts élastiques pénètrent dans l'entraînement réglable (1) et se trouvent en contact direct avec des plaquettes de contact (9),
dans lequel l'entraînement réglable (1) comprend un moteur électrique (2), un arbre de sortie (3), une plaque conductrice (4), un boîtier (6) et une interface de raccordement (5),
- dans lequel le moteur électrique (2) entre en contact avec la plaque conductrice (4) et est conçu pour entraîner l'arbre de sortie (3),
- dans lequel le boîtier (6) accueille la plaque conductrice (4) et
- dans lequel la plaque conductrice (4) est dimensionnée comme plus étroite qu'une ouverture du boîtier (8), de sorte que la plaque conductrice (4) est insérable dans le boîtier (6) par l'ouverture du boîtier (8),
**caractérisé en ce que**
- l'interface de raccordement (5) comprend une connexion enfichable directe avec les plaquettes de contact (9), les plaquettes de contact (9) étant conçues pour le contact direct avec une fiche (7), et les broches étant évitées du côté de l'entraînement réglable (1), de sorte que les contacts élastiques saillants du côté de la fiche appuient directement sur les plaquettes de contact (9) de la plaque conductrice (4),
- et dans lequel la même ouverture du boîtier (8) au travers de laquelle la plaque conductrice (4) est insérable dans le boîtier (6) fonctionne simultanément comme composant de l'interface de raccordement (5) en tant qu'accès aux plaquettes de contact (9) pour la fiche (7).

2. Entraînement de lève-vitres selon la revendication 1, **caractérisé en ce que** la plaque conductrice (4) comprend un premier dispositif d'enclenchement (21) et le boîtier (6) comprend un deuxième dispositif d'enclenchement (23) complémentaire du premier dispositif d'enclenchement (21), et/ou **en ce que** la plaque conductrice (4) comprend une butée (24) destinée au positionnement défini de la plaque conductrice (4) dans le boîtier (6).

3. Entraînement de lève-vitres selon la revendication 1, **caractérisé en ce que** la plaque conductrice (4) comprend un support posé (18), en particulier en plastique, dans lequel le premier dispositif d'enclenchement (21) et/ou la butée (24) sont conçus sur le support (18).

4. Entraînement de lève-vitres selon l'une des revendications ci-dessus, **caractérisé en ce que** le moteur électrique (2) comprend deux broches (16, 17), et **en ce que** la plaque conductrice comprend un dispositif de contact moteur (20) pouvant être branché sur les deux broches (16, 17), en particulier un contact à fourche.

5. Entraînement de lève-vitres selon l'une des revendications ci-dessus, **caractérisé en ce que** l'ouverture du boîtier (8) s'ouvre perpendiculairement à un axe d'induit (11) du moteur électrique (2) et la plaque conductrice (4) est insérable perpendiculairement à l'axe d'induit (11).

6. Entraînement de lève-vitres selon l'une des revendications ci-dessus, **caractérisé en ce que** l'interface de raccordement (5) comprend une collerette de fiche (19) sur un côté extérieur du boîtier (6) et autour de l'ouverture du boîtier (8), dans lequel la collerette de fiche (19) ne s'étend pas plus loin que le boîtier (6) dans la direction de l'arbre de sortie (3), et dans lequel les plaquettes de contact (9) sont agencées au centre de la collerette de fiche (19).

7. Entraînement de lève-vitres selon l'une des revendications ci-dessus, **caractérisé en ce que** le moteur 'électrique (2) comprend un porte-balais (15) et un stator (14), dans lequel le porte-balais (15) est inséré dans le boîtier (6) et le stator (14) se connecte au porte-balais (15) à l'extérieur du boîtier (6) .

8. Entraînement de lève-vitres selon l'une des revendications ci-dessus, **caractérisé en ce qu'**un aimant émetteur (26) se trouve sur l'axe d'induit (11) du moteur électrique (2), dans lequel l'aimant émetteur (26) coopère avec un capteur à effet Hall (22) sur la plaque conductrice (4).

9. Entraînement de lève-vitres selon l'une des revendications ci-dessus, **caractérisé en ce que** la plaque conductrice (4) est agencée en diagonale avec un angle (α) par rapport à un plan (E), lequel est perpendiculaire à l'arbre de sortie (3), dans lequel l'angle (a) est choisi de façon à ce que les plaquettes de contact (9) se trouvent au centre de l'ouverture du boîtier (8).

10. Entraînement de lève-vitres selon la revendication 9, **caractérisé en ce que** l'axe d'induit (11) du moteur électrique (2) est perpendiculaire à l'arbre de sortie (3) et l'angle (α) est de 1 à 15°, de préférence de 10°, de sorte qu'une étendue du boîtier (6) et du moteur électrique (2) dans la direction de l'arbre de sortie (3) est aussi faible que possible.

11. Entraînement de lève-vitres selon l'une des revendications 1 à 8, **caractérisé en ce que** la plaque conductrice (4) est agencée perpendiculairement au plan (E), lequel est perpendiculaire à l'arbre de sortie (3).

12. Entraînement de lève-vitres selon l'une des revendications 1 à 9, **caractérisé en ce que** l'interface de raccordement (5) comprend une collerette de fiche (19), laquelle est une partie intégrante du boîtier (6) et fait saillie vers l'extérieur, dans lequel la collerette de fiche (19) ne s'étend pas plus loin que le boîtier total (6) dans une direction parallèle à un axe de sortie (10) de l'arbre de sortie (3) de l'entraînement réglable (1).

13. Procédé de montage de l'entraînement réglable (1) d'un entraînement de lève-vitres selon l'une des revendications 1-12 et d'introduction d'une fiche (7) dans celui-ci, comprenant les étapes suivantes :
- préparation d'un boîtier (6) doté d'une ouverture du boîtier (8),
- insertion d'une plaque conductrice (4) dans l'ouverture du boîtier (8), la plaque conductrice (4) étant dimensionnée de manière à être plus étroite que l'ouverture du boîtier (8), et
- montage d'un moteur électrique (2) sur et/ou dans le boîtier (6) avant ou après l'insertion de la plaque conductrice (4),
- dans lequel le moteur électrique (2) entre en contact avec la plaque conductrice (4),
- dans lequel une interface de raccordement (5) est agencée au niveau de l'entraînement réglable (1), laquelle comprend une connexion enfichable directe avec les plaquettes de contact (9) directement sur la plaque conductrice (4),
- introduction d'une fiche (7) dans l'ouverture du boîtier (8),
- dans lequel les plaquettes de contact (9) sont conçues pour le contact direct avec des contacts élastiques d'une fiche (7), et les broches sont évitées du côté de l'entraînement réglable (1), de sorte que les contacts élastiques saillants du côté de la fiche appuient directement sur les plaquettes de contact (9) de la plaque conductrice (4),
- dans lequel la même ouverture du boîtier (8) est utilisée aussi bien pour l'insertion de la plaque conductrice (4) dans le boîtier (6) que pour l'introduction de la fiche (7)
